# EUROPÄISCHE PATENTSCHRIFT

(11) **EP 2 463 075 B1**
(45) Veröffentlichungstag und Bekanntmachung des Hinweises auf die Patenterteilung: **16.11.2016**
(21) Anmeldenummer: 12157656.5
(22) Anmeldetag: 28.06.2007
(51) Int. Cl.: B29C 45/72, B29C 35/16, B29C 49/64, B25J 15/12, B65G 47/90

(54) **Hilfsvorrichtung sowie Verfahren zur Nachbehandlung von Preformen**
Auxiliary device, and method for finishing preforms
Dispositif auxiliaire et procédé de post-traitement de préforms

(30) Priorität: 29.06.2006 CH 10432006; 25.01.2007 CH 1212007; 09.05.2007 CH 7592007
(43) Veröffentlichungstag der Anmeldung: 13.06.2012
(62) Teilanmeldung aus: 07720216.6
(73) Patentinhaber: Netstal-Maschinen AG, 8752 Näfels (CH)
(72) Erfinder: Bock, Stefan, 8750 Glarus (CH)
(74) Vertreter: Wilhelm, Ludwig

(56) Entgegenhaltungen:
- EP-A- 0 372 671
- EP-A1- 0 813 949
- WO-A-2004/041510
- FR-A1- 2 528 016
- US-A- 4 310 282
- US-A- 5 419 427

## Beschreibung

### Technisches Gebiet

Die Erfindung betrifft eine Hilfsvorrichtung, welche einen Greifer mit einer Vielzahl von Nippeln mit je einem Einführteil in hülsenförmige Teile aufweist, insbesondere für die Nachkühlzone von Spritzgießmaschinen zur Herstellung von Preformen, wobei die hülsenförmigen Teile als Kühlhülsen ausgebildet sind.

Die Erfindung betrifft ferner ein Verfahren zur Nachbehandlung von Preformen mit einem Gewindeteil, einem Neckring sowie einem Blasteil,
- welche in noch heißem, forminstabilem Zustand aus den offenen Formhälften entnommen,
- Entnahmehülsen bzw. Kühlhülsen für eine Außenkühlung übergeben
- und nach dem Einschieben an die Innenwand der Entnahmehülsen bzw. Kühlhülsen innerhalb der Zeitdauer eines Spritzgießzyklus durch Druckluft angepresst und kalibriert werden.

Noch vor zwei bis drei Jahrzehnten wurde bei der Herstellung von Preformen eine strenge Trennung von zwei Phasen vorgenommen:
Phase 1: Die Preformen werden in den Formhälften im Spritzgießverfahren mittels heißer Schmelze geformt und in den Formen so weit abgekühlt, dass sie schadlos einem Nachkühler übergeben werden können.
Phase 2: Die Preformen werden den offenen Spritzgießformen entnommen und einem Nachkühler übergeben. In der Praxis haben sich drei Systeme durchgesetzt:
   - Die noch heißen Preformen werden direkt Kühlhülsen eines Nachkühlers übergeben, der im Ansatz einem Entnahmeroboter gleichkommt. Dabei weist der Nachkühler ein Mehrfaches an Kühlpositionen auf im Verhältnis zur Anzahl Preformen eines Spritzgießzyklus.
   - Gemäß dem zweiten Konzept werden die noch heißen Preformen durch einen Entnahmeroboter den offenen Formen entnommen und einem Nachkühler übergeben.
   - Gemäß einem dritten Konzept wird die Roboterfunktion als Entnahmegreifer mit wassergekühlten Entnahmehülsen sowie einem Transfergreifer für die Übergabe an einen Nachkühler aufgeteilt.

Gemäß der jüngsten Entwicklung wird versucht, die Spritzgießmaschinen-Zykluszeit stark zu verkürzen und die Preformen in weichem und form instabilem Zustand den Formen zu entnehmen. Damit aber treten bisher weniger beachtete Probleme in den Vordergrund. Physikalisch bedingt verläuft die Abkühlung innerhalb der Wandungen der Preformen ungleichmäßig:
- Sobald die Preformen den offenen Formhälften entnommen werden, treten sofort Wärmespannungen in den Preformen und Formänderungen auf.
- Jeder Eingriff durch roboterartige Greifer kann zu Formschäden führen.
- Das gleiche tritt bei horizontaler Lage der Preformen im Nachkühler auf.

Damit wird jeder Eingriff im Rahmen der Nachkühlung zu einer äußerst delikaten Arbeit. Gleichsam ein Schulbeispiel dafür sind Roboter in Bezug auf das Handling von rohen Eiern. Diese müssen zwar sicher gehalten werden, wenn möglich aber ohne Anwendung von örtlichen Druckkräften, welche zum Bruch der Eierschalen führen könnten.

Bei der Herstellung von Spritzgießteilen mittels Spritzgießmaschinen ist für die Zeit eines vollen Zyklus die Kühlzeit ein bestimmender Faktor. Die erste und Hauptkühlleistung findet noch in den Spritzgießformen statt. Beide Spritzgießformhälften werden während dem Spritzgießprozess intensiv wassergekühlt, so dass die Temperatur der Spritzgießteile noch in der Form von beispielsweise 280°C, zumindest in den Randschichten auf einen Bereich von 70°C bis 120°C, gesenkt werden kann. Es wird in den äußeren Schichten sehr rasch die sogenannte Glastemperatur von etwa 140°C unterschritten. Der eigentliche Spritzgießvorgang bis zur Entnahme der Spritzgießteile konnte in der jüngeren Vergangenheit im Falle der Herstellung von dickwandigen Preformen auf etwa 12 bis 15 Sekunden und bei dünnwandigen Preformen auf unter 10 Sekunden gesenkt werden. Dies bei optimalen Qualitäten in Bezug auf die Preformen. Die Preformen müssen in den Formhälften so stark verfestigt werden, dass diese ohne Schaden von den Auswurfhilfen gefasst und einer Entnahmevorrichtung übergeben werden können. Die Entnahmevorrichtung weist eine den Spritzgießteile-Außenabmessungen angepasste Form auf. Die intensive Wasserkühlung in den Spritzgießformhälften erfolgt, physikalisch bedingt, von außen nach innen zeitverzögert. Dies bedeutet, dass die genannten 70°C bis 120°C nicht einheitlich im ganzen Querschnitt erreicht werden. Die Folge ist, dass im Materialquerschnitt gesehen eine rasche Rückerwärmung von innen nach außen erfolgt, sobald die intensive Wasserkühlung durch die Formen unterbrochen wird. Der Nachkühlung kommt aus zwei Gründen größte Bedeutung zu. Formänderungen sollen bis zum formstabilen Lagerzustand aber auch Oberflächenschäden, etwa Druckstellen, usw., vermieden werden. Es muss auch verhindert werden, dass die Abkühlung im höheren Temperaturbereich zu langsam erfolgt und sich durch Rückerwärmung örtlich schädliche Kristallbildungen einstellen. Ziel ist ein gleichmäßiger amorpher Zustand im Material der fertigen Preform. Die Resttemperatur der fertigen Preformen soll so tief sein, dass in großen Abpackgebinden mit Tausenden von lose eingeschütteten Teilen an den Berührungspunkten keine Druck- und Haftschäden entstehen können. Die Spritzgießteile dürfen auch nach einer leichten Rückerwärmung eine Oberflächentemperatur von 40°C nicht überschreiten. Die Nachkühlung nach der Entnahme der heißen, forminstabilen Preformen aus der Spritzgießform ist für die Maßhaltigkeit sehr wichtig.

Mit der WO 2004/041510 schlägt die Anmelderin eine Intensivkühlstation sowie eine Nachkühlstation und bei der Intensivkühlstation in die Preformen einführbare Kühlstifte für eine Innenkühlung vor. Die Innenform der Kühlhülsen wird dabei auf die entsprechende Innenform der Spritzgießform abgestimmt, derart, dass die Preformen nach der Entnahme aus den Spritzgießformen möglichst spielfrei bis zur vollwandigen Anlage in die Kühlhülsen einschiebbar sind. Sind die Preformen in der ersten Phase der Nachkühlung in liegender Position, dann neigen sie dazu, sich nach unten auf das entsprechende Kühlhülsenteil aufzulegen. Durch einen intensiveren Kühlkontakt im unteren Bereich werden die Preformen unten stärker abgekühlt, so dass in der Preform Spannungen auftreten und die Preform eine Tendenz zum Ovalisieren hat. Wenn in der ersten Phase der Nachkühlung bei verkürzter Kühlung in den Spritzgießformen einzelne Preformen sich leicht deformieren, dann kann die entsprechende Formänderung bei zunehmend verfestigten Preformen nicht mehr korrigiert werden. Durch eine gezielte Steuerung von Saug- und Blasluft kann im Inneren der Preformen gemäß einer vorzugsweisen Ausgestaltung der WO 2004/041510 ein Blähdruck erzeugt und die Preform zum vollständigen Anliegen an die ganze Innenwandfläche der Kühlhülse gebracht werden. Nach dem satten Anliegen der Preformen an die Innenwandfläche der Kühlhülsen wird der Flächenkontakt über mehrere Sekunden aufrecht erhalten und ein Kalibrationseffekt für jede einzelne Preform erzeugt. Der Kalibrationseffekt gibt bei der Herstellung von Preformen einen hohen Produktions- und Qualitätsstandard, wie er im älteren Stand der Technik nicht möglich war. Die Preformen werden auf diese Weise kurz nach der Entnahme aus den Spritzgießformen wieder in eine exakte Form gebracht. Allfällige Maßveränderungen werden nach dem ersten kritischen Handling von den Spritzgießformen in die Kühlhülsen wieder aufgehoben. Die Kalibrierung der Preformen gestattet, diese mit noch höheren Temperaturen den Formen zu entnehmen und eine noch kürzere Spritzgieß-Zykluszeit zu erreichen.

Die WO 2004/041510 schlägt zwei Lösungsvarianten für die Erzeugung eines Blähdruckes vor. Gemäß einer ersten Variante wird an einem Kühlstift bzw. an einer Blasdüse ein Dichtring angeordnet, der auf dem konischen Übergang im Preforminnenraum zur Anlage gebracht wird. Gemäß der zweiten Lösungsvariante weist die Blasdüse ringförmige Dichtungen auf, welche bestimmt sind zur stirnseitigen Auflage des Offnungsrandes der Preform. Hier wirkt der Blähdruck auf die ganze Preform. Der Nachteil beider Lösungen liegt darin, dass in der Praxis bei Mehrfachspritzformen mit beispielsweise 100 bis 200 Formnestern eine sehr hohe Präzision für die Führung bzw. Bewegung aller Blasdüsen vorausgesetzt werden muss.

Die EP 900 135 schlägt ein Konzept analog zur zuvor erwähnten zweiten Lösungsvariante vor. Das Abdichten des Öffnungsrandes setzt eine gewisse Druckkraft und auch eine genügende Formfestigkeit des Gewindeteils voraus. Um Formänderungen des Gewindeteils zu vermeiden, müssen die Preformen bis zu einer höheren Formfestigkeit in den Spritzformen belassen werden. Dies aber steht einer Verkürzung der Spritzgieß-Zykluszeit entgegen.

Mit der WO 02/051614 schlug die Anmelderin eine Außenkühlung des Gewindeteils von Preformen vor. Dabei wurde in der Art von Spraydüsen Kühlluft direkt auf das Gewindeteil geblasen. Im Rahmen von einer längeren Zykluszeit war jedoch die Gewindeaußenkühlung nicht zwingend.

Die EP-A-0372671 offenbart die Herstellung von Preforms für blasgeformte Artikel. Die Preformen werden mittels Spritzgießen in Kavitäten hergestellt, die zwischen einer beweglichen und einer feststehenden Formhälfte gebildet werden. In der feststehenden Formhälfte sind neben Formeinsätzen für den Spritzgießvorgang auch Formeinsätze für einen Blasvorgang vorhanden. Auf der beweglichen Formhälfte sind sowohl Spritzgießkerne oder -dorne für die Ausbildung der Preforms als auch Blaskerne oder -dorne befestigt. Beim Verfahren der beweglichen Formhälfte werden die Spritzgießkerne bzw. -dorne in die Formeinsätze für den Spritzgießvorgang ein- und ausgefahren, wohingegen die Blaskerne bzw. -dorne zeitgleich in die Formeinsätze für den Blasvorgang ein- und ausgefahren werden. An den Blaskernen bzw. -dornen sind Blasteile vorgesehen, welche über eingebrachte Pressluft an die Innenwand der Preforms angepresst werden können.

Die FR-A-2528016 offenbart eine Greif- und Haltevorrichtung mit mindestens zwei elastisch verformbaren Press- bzw. Dichtringen, welche durch eine Relativbewegung von zwei voneinander beabstandeten Halteschultern aufgebaucht werden, so dass zwei Wulste entstehen, die in Kontakt mit dem Halsteil eines zu greifenden Hohlkörpers wie beispielsweise eines Flakons oder dergleichen kommen und diesen halten können. Eine Vielzahl von derartigen Greif- und Haltevorrichtungen sind Bestandteil eines Kettenförderers, wobei die Greif- und Haltevorrichtungen quer zur Bewegungsrichtung des Kettenförderers nach Art von Kettengliedern eingebaut sind.

### Darstellung der Erfindung

Der Erfindung wurde nun die Aufgabe gestellt, Hilfsvorrichtungen mit einer Vielzahl von Nippeln zu suchen, welche am Produkt roboterartig angesetzt werden und im Falle von hülsenförmigen Teilen, im Bereich der Nachkühlung von Preformen, die Sicherstellung höchster qualitativer Parameter und eine maximale Formgenauigkeit der Teile ermöglichen.

Die erfindungsgemäße Hilfsvorrichtung ist durch die Merkmale des Anspruchs 1 definiert.

Das erfindungsgemäße Verfahren zur Nachbehandlung von Preformen ist durch die Merkmale des Anspruchs 8 definiert.

Von den Erfindern ist erkannt worden, dass eine Hilfsvorrichtung in der Art eines roboterartigen Greifers für eine Viehzahl von hülsenförmigen forminstabilen Teilen genau so fein arbeiten muss wie beim Handling von rohen Eiern, ganz besonders, wenn die Teile schadenfrei bleiben müssen. Das Ansetzen der Press- bzw. Dichtringe muss so konzipiert sein, dass von vornherein keinerlei Druckstellen bzw. Deformationen entstehen. Die neue Erfindung lehnt sich an das Konzept eines Thermosflaschenverschlusses an, bei dem ein Glashohlkörper verschlossen werden muss. Dabei wird durch eine Drehbewegung mit einem Pressring ein Dichtschluss erzeugt.

Von den Erfindern ist ferner erkannt worden, dass speziell im Falle eines Einsatzgebietes im Bereich der Nachkühlung von Preformen mehrere Grundfunktionen gleicherweise erfüllbar sein müssen.

Es sind dies:
- das bloße Greifen der Preformen sowie das Entnehmen aus Kühlhülsen,
- das Umstecken in nächstfolgende Kühlhülsen,
- das Kalibrieren der Preformen mittels Luftdruck und
- wenn notwendig ein aktiver Einsatz von Saug- und Blasluft.

In Bezug auf die Vorrichtung muss eine Vielzahl von Einführteilen zeitgleich in die je entsprechenden hülsenförmigen Spritzgießteile eingeführt werden. Jede Lageabweichung des Greifers führt zu Problemen in Bezug auf ein optimales Einführung und Platzieren der Press- bzw. Dichtringe.

In vielen bisherigen Ansätzen ist in Bezug auf das Verfahren gleichsam das Ziel der kürzestmöglichen Zykluszeit für einen ganzen Spritzgießzyklus verfehlt worden. Damit beispielsweise eine Luftblaseinrichtung überhaupt eine minimale Wirkung für die Innenkühlung der Preformen entfalten kann, braucht diese mindestens einige Sekunden Luftblaszeit. Der Spritzgießvorgang in den Formkavitäten benötigt mindestens 4 bis 5 Sekunden. Die Trockenlaufzeit einer Spritzgießform liegt bei etwa 2 bis 3 Sekunden. Bei einer gesamten Zykluszeit von 10 Sekunden verbleiben, wenn von 2 bis 3 Sekunden Trockenlaufzeit ausgegangen wird, maximal 2 bis 3 Sekunden für eine Luftblaskühlung. Bei einer wünschbaren Gesamtzykluszeit für die Herstellung von Preformen von noch geringerer Dauer würde keine Zeit mehr für eine Luftblaskühlung verbleiben.

Das neue erfindungsgemäße Verfahren geht von der Erkenntnis aus, dass als erster Ansatz eine Kalibration die Probleme, welche mit einer sehr frühen Preformentnahme aus den offenen Formen verbunden sind, beseitigen kann. Je mehr die Preform forminstabil sind, umso mehr entstehen die einleitend dargestellten Formveränderungen. Je weicher die heiße Preform noch ist, desto kleiner ist der erforderliche Blähdruck, um eine vollständige Formgenauigkeit wiederherzustellen, umso weniger dürfen jedoch örtliche Eindrücke erzeugt werden, da diese wiederum negative Druckspuren oder sogar Formänderungen verursachen können.

Die erfindungsgemäße Lösung vermeidet die beschriebenen Nachteile des Standes der Technik. Es werden, zumindest gemäß bevorzugten Ausgestaltungen, in Richtung der Preformwandung keine Längskräfte durch die Press- bzw. Dichtringe übertragen und keine Druckstellen erzeugt. Die neue Lösung geht von dem Konzept eines Thermoflaschenverschlusses aus. Beiden Anwendungen gleich ist das heikle Wandmaterial. In einem Falle ist es Glas, im andern ist es der noch leicht verformbare Kunststoff. Die Dichtstelle muss nicht mit höchster Präzision festgelegt, kann jedoch leicht optimiert werden. Durch das Übergeben der Preformen von den Spritzgießformen an die Entnahmehülsen und das sofortige satte Einführen der Preformen in die Entnahmehülsen wird die Effizienz der Kühlung auf ein Maximum gesteigert. Das neue erfindungsgemäße Verfahren strebt die Erhaltung und Wiederherstellung der maximalen Maßgenauigkeit an. Jedwelche Formfehler, die von der Übergabe an die Kühlhülsen bis zum Erreichen einer genügenden Formstabilität entstehen, sollen mit der Kalibration aufgehoben werden. Im Kernansatz wird alles getan, damit die gewünschte geometrische Endform der Preform mit höchstmöglicher Präzision ohne Druckschäden erreicht bzw. wieder hergestellt wird. Mit der neuen Erfindung wird auf eine Luftinnenkühlung verzichtet und nur mit Greiferkräften gearbeitet, die keine Spuren hinterlassen. Der große Vorteil der neuen Erfindung liegt darin, dass bei voller Erreichung aller Qualitätskriterien eine massive Senkung der ganzen Zykluszeit und eine entsprechende Leistungssteigerung der Spritzgießmaschine von 20 % bis 30 % ermöglicht wird. Die Entformung der Preformen kann noch früher, in einem form instabilen Zustand der Preformen, stattfinden.

Weitere Untersuchungen haben gezeigt, dass die Kalibration bei einfachen zylindrischen Preformen die erfindungsgemäße Kalibration in Feldversuchen erfolgreich ist. In der Praxis gibt es jedoch eine große Vielfalt von Preformen, welche eine je spezifische Behandlung notwendig machen können.
- Besonders heikel erweisen sich Preformen, welche einen sich konisch verjüngenden Halsansatz zwischen dem Neckring sowie dem zylindrischen Blasteil haben.
- Eine weitere heikle Preform weist im entsprechenden Halsteil eine Erweiterung auf.

Die neue Erfindung gestattet eine ganze Anzahl besonders vorteilhafter Ausgestaltungen. Es wird dazu auf die Ansprüche 2 - 15 sowie 17 - 31 Bezug genommen.

Gemäß einer ganz besonders vorteilhaften Ausgestaltung der Vorrichtung werden die Press- bzw. Dichtringe im nicht aktivierten Zustand in Bezug auf die Nippel leicht schwimmend gelagert. Es ist eine Tatsache, dass eine Spritzgießmaschine als solche nicht mit höchster Präzision hergestellt werden muss. Dies im Unterschied etwa zu den Spritzgießwerkzeugen und allen von der Spritzgießmaschine zu gewährleistenden Funktionen. Jeder Ablauf muss unter höchster Präzision erfolgen. Auf die Press- bzw. Dichtringe bezogen bedeutet dies, dass diese für das Einführen in das Innere der Teile bzw. der Preformen eine leichte Spielfreiheit haben müssen. Mit der leicht schwimmenden Lagerung suchen sich die Press- bzw. Dichtringe eine optimale Stellung innerhalb der Preformen. Beim Aktivieren legt sich jeder Press- bzw. Dichtring in seiner optimalen Stellung an die Innenwandung an. Damit wird beispielsweise ein Schrägdrücken mit entsprechend negativen Kräften vermieden.

Jeder der Nippel kann eine oder mehrere der folgenden Funktionen übernehmen:
- eine Dichtfunktion für das Kalibrieren der Preformen,
- Handlingsfunktionen, sei es für das Umstecken der Preformen oder das Übergeben an einen Nachkühler,
- die Funktion für das Erzeugen eines Über- oder Unterdruckes in den Preformen,
- eine Blasfunktion, wenn diese erwünscht ist.

Für das Aufbauchen der Press- bzw. Dichtringe werden zwei Ausgestaltungswege vorgeschlagen:
- Gemäß dem ersten Ausgestaltungsweg werden die Press- bzw. Dichtringe, analog zu dem Thermosflaschenverschluss, mechanisch aufgebaucht.
- Gemäß dem zweiten Lösungsweg erfolgt das Aufbauchen eines ballonartigen Press- bzw. Dichtringes über ein Druckmedium.

Gemäß dem ersten Ausgestaltungsweg werden die Press- bzw. Dichtringe zwischen zwei relativ zueinander bewegbaren Halteschultern zusammengequetscht. Die Dichtschultern können zur Vermeidung einer axialen Verschiebung mit gleichem Hub aufeinander zubewegt werden. Trotz einer massiven Verkürzung der Zykluszeit können die Preformen ohne Schaden nachgekühlt werden. Es werden keinerlei Kräfte ausgeübt, welche sich in Bezug auf die Preformwandung negativ auswirken könnten. Zahlreiche Versuche bestätigten, dass mit einer schwimmenden Lagerung der Press- bzw. Dichtringe auch bei raschen Bewegungen keinerlei Druck- bzw. Schadspuren an den Preformen erzeugt werden. Vorteilhafterweise wird wenigstens eine der beiden Dichtschultern mittels eines Pneumatikkolbens bewegt. Die bewegbare Halteschulter wird durch eine Rückstellfeder für die Ruhelage der Press- bzw. Dichtringe zurückbewegt. Vorrichtungsgemäß weist jeder Dichtring der Nippel einen eigenen Pneumatikantrieb auf, wobei alle Press- bzw. Dichtringe zeitgleich aktivierbar sind.

Die neue Erfindung hat den großen Vorteil, dass die Nippel durch die sich einstellende Reibung gehalten werden. Die Kraft, die sich aus dem Blähdruck ergibt, muss deshalb nicht über die Maschine abgefangen werden. Für die vorrichtungsgemäße Ausgestaltung ist eine gleichzeitige Quetschbewegung für 100 bis 200 Verschlüsse für die Preformöffnung mit einer Linearbewegung leicht durchführbar. Dies umso mehr, als maschinenbaulich beliebige Kräfte, sei es hydraulisch oder elektrisch, einfach aufbringbar sind und nicht auf die Maschine übertragen werden.

Ein weiterer wichtiger Ausgestaltungsgedanke liegt darin, dass die Nippel positionsgesteuert an eine wählbare optimale Dichtstelle in einem Bereich zwischen Gewindeteil und Blasteil in die Preformen eingeführt werden. Damit kann unterschiedlichsten Formen des Überganges zwischen Gewindeteil und Blasteil Rechnung getragen werden. Die beste Dichtstelle wird bei Beginn jeder Produktion gesucht. Nach dem Einfahren der Nippel muss die Außenwandung des ganzen Preform-Blasteiles in Wandkontakt mit der entsprechenden Innenwandung der Entnahmehülse sein. Bevorzugt werden deshalb die Preformen bereits bei der Übernahme durch die Entnahmehülsen bis zum vollständigen und satten inneren Wandkontakt des ganzen Blasteiles, mit Einschluss des geschlossenen Bodenteils, in die Entnahmehülsen eingeführt. Die Preformen werden während der Zeitdauer von mehreren Spritzgießzyklen in wassergekühlten Kühlhülsen eines Nachkühlers nachgekühlt, wobei die Kalibration innerhalb der Zeitdauer eines Spritzgießzyklus erfolgt bzw. durch die Zeitdauer eines Spritzgießzyklus begrenzt wird.

Vorrichtungsgemäß weist jeder Nippel zwei relativ zueinander bewegbare Rohrstücke auf, an deren Ende je eine Halteschulter fest angebracht ist. Für beide zuvor beschriebenen Lösungswege weist jeder Nippel Luftkanäle auf, über welche gesteuert Druckluft in den Innenraum der Blasteile der Preformen zuführbar ist. Mittels gesteuerter Verstellmittel wird die Betätigungsplatte in Bezug auf die Plattform bewegt, für eine zeitgleiche Aktivierung der Press- bzw. Dichtringe. Die Verstellmittel haben während der Kalibration eine reine Stützfunktion. Die Press- bzw. Dichtringe halten sich in zusammengequetschtem Zustand an der Preforminnenseite. Bereits eine geringe Kraft der Verstellmittel für die Betätigungsplatte genügt für einen guten Dichtschluss. Vorteilhafterweise sind die Nippel über eine gemeinsame Betätigungsplatte an einer Plattform angeordnet, über welche die Einfahr- und Ausfahrbewegung der Nippel in bzw. aus den Preformen sowie die Positionierung der Nippel innerhalb der Entnahmehülsen erfolgt. Dazu sind der Plattform gesteuerte Antriebsmittel zugeordnet zur Positionierung der Press- bzw. Dichtringe in einer optimalen Eindringtiefe bzw. an einer optimalen Stelle.

Gemäß einer ersten bevorzugten Ausgestaltung erfolgen die Entnahme der Preformen aus den Entnahmehülsen und die Übergabe an Kühlhülsen eines Nachkühlers bei Erreichen einer genügenden Formstabilität, jedoch innerhalb der Zeit eines Spritzgießzyklus. Nach der Kalibration können die Press- bzw. Dichtringe entspannt und der Druck in dem Innenraum der Blasteile abgelassen werden. Über die Luftkanäle kann über die Nippel ein Unterdruck erzeugt und die Preformen mittels der Nippel an den Nachkühler übergeben werden. Der Nippel hat hierzu keine Kühlfunktion. Bevorzugt erfolgt während der kurzen Kalibrationszeit kein Luftaustausch zwischen dem Inneren der Preform und der Umgebungsluft. Die Nippel sind mit Luftkanälen ausgerüstet, über welche in den Preformen Unterdruck zur Preformentnahme erzeugbar ist. Innerhalb der Nippel kann der Luftkanal für Druckluft und Saugluft derselbe sein. Bevorzugt werden die Rohrstücke ineinander verschieblich angeordnet, wobei das innere Rohrstück wenigstens einen Luftkanal aufweist. Für das Konzept des ersten Lösungsweges weist die Vorrichtung einen steuerbaren Entnahmegreifer auf, mit einer Anzahl Entnahmehülsen, die wenigstens der Anzahl Spritzpositionen der Spritzgießformen entspricht. Die Vorrichtung ist mit einem steuerbaren Pressluftanschluss ausgerüstet zur Erzeugung eines Blähdruckes im Inneren der Preformen für die Kalibrierung der Preformen sowie einem steuerbaren Anschluss für Saugluft, wobei nach Umschalten auf Unterdruck anstelle des Blähdruckes die Preformen mittels der Nippel aus den Entnahmehülsen entnehmbar sind. Bei diesem Konzept besteht die Vorrichtung neben dem Entnahmegreifer aus einem Nachkühler sowie einem Transfergreifer für die Übergabe bzw. für das Umstecken der Preformen vom Entnahmegreifer an den Nachkühler, zur Fertigkühlung der Preformen, unabhängig des Spritzgießzyklus.

Gemäß einer zweiten vorteilhaften Ausgestaltung weist die Vorrichtung einen als Entnahmeroboter ausgebildeten Nachkühler mit einer vielfachen Anzahl an Kühlpositionen in Bezug auf die Spritzpositionen der Spritzgießformen auf. Dabei werden die heiß zu übergebenden Preformen in jeweils freie Kühlpositionen eingeschoben, kalibriert, intensiv gekühlt und nach der Fertigkühlung ausgestoßen. Hier können die Nippel das Ausstoßen der fertig gekühlten Preformen aus den Entnahmehülsen sowie die Weitergabe an ein Förderband unterstützen mit gesteuerter Saug- und Druckluft. Auch gemäß der zweiten Ausgestaltung werden nach der Kalibration die Press- bzw. Dichtringe entspannt, der Druck in dem Innenraum der Blasteile abgelassen, die Nippel ausgefahren und in einer Wartestellung gehalten bis zur Neupositionierung des Nachkühlers für eine neue Charge von Preformen des nachfolgenden Spritzgießzyklus.

Für beide Ausgestaltungen erfolgt das Kalibrieren der Preformen durch Druckluft und ist in der Zeitdauer durch den Spritzgießzyklus begrenzt. Das Anpressen und Kalibrieren der noch weichen Preformen hat enorme Vorteile:
- Erstens wird durch das feste Anpressen der Außenhaut der Preformen an die innere, mit Wasser gekühlte Entnahmehülse ein maximaler Wärmeübergang und eine maximale Kühlwirkung sichergestellt.
- Zweitens werden die äußeren Abmessungen der Preformen mit der Kalibration exakt wieder hergestellt und bleiben während der anschließenden Formverfestigung erhalten.
- Drittens werden mit dem raschen Durchfahren der sogenannten Glastemperatur die physikalischen Qualitätsparameter sichergestellt.
- Viertens wird mit der Erzeugung einer stark abgekühlten äußeren Materialschicht eine genügende Formstabilität der Preformen für das nachfolgende Handling von den Entnahmehülsen in die Kühlhülsen eines Nachkühlers sowie den anschließenden Abwurf auf ein Transportband erreicht.

Gemäß einem weiteren besonders vorteilhaften Ausgestaltungsweg wird vorrichtungsgemäß vorgeschlagen, dass die wassergekühlten Entnahmehülsen in dem Bereich zwischen dem Gewindeteil und dem Blasteil Belüftungskanäle für eine entsprechende Außenkühlung des entsprechenden Preformbereiches, ferner einen Luftanschluss für die Belüftungskanäle aufweisen. In Abhängigkeit der geometrischen Ausgestaltung der Preformen sind die Belüftungskanäle in dem Übergangsbereich zwischen Gewindeteil und dem Neckring und/oder in dem Übergangsbereich zwischen Neckring und Blasteil angeordnet. Bevorzugt werden die wassergekühlten Entnahmehülsen aus standardisierten Teilen ausgebildet sind, derart, dass fallweise Führungsringe für die Belüftungskanäle für eine Kühlung des Übergangsbereiches zwischen Gewindeteil und dem Neckring und/oder des Übergangsbereiches zwischen Neckring und Blasteil kundenspezifisch eingesetzt werden können.

Verfahrensgemäß wird ferner vorgeschlagen, dass unmittelbar nach der Übergabe der Preformen an die Kühlhülsen des Entnahmegreifers bis zum Ende der Kalibration im Bereich zwischen Gewindeteil und Blasteil eine Außenkühlung der Preformen mittels Luft eingesetzt wird. Bevorzugt wird für die Kalibration an Nippeln angebrachte Press- bzw. Dichtringe positionsgesteuert bis in den Übergangsbereich zwischen Gewindeteil und dem Neckring oder bis in den Übergangsbereich zwischen dem Neckring und dem Blasteil in die Preformen eingeführt. In Kombination werden die Preformen bereits nach dem Einschieben in die Kühlhülsen und während der Kalibration von außen in dem Übergangsbereich zwischen Gewindeteil und dem Neckring und/oder bis in den Übergangsbereich zwischen dem Neckring und dem Blasteil von außen gekühlt. Ein ganz besonderer Vorteil liegt darin, dass noch vor der Kalibration an den kritischen stützlosen Teilen der Preformen, unmittelbar nach der Übergabe von den offenen Formhälften an die Kühlhülsen, die Außenhaut der Preformen sofort stärker verfestigt wird, sodass die Greiferkräfte keinerlei negativen Einfluss auf die entsprechenden Bereiche haben.

Im Falle von Preformen mit einem sich erweiternden Hals wird der Übergangsbereich zwischen dem Gewindeteil und dem Neckring von außen luftgekühlt. Hier werden die Preformen bis auf Anschlag der Neckringe an die Stirnseite der Kühlhülsen eingeschoben, wobei die Kühlhülsen so ausgebildet sind, dass zwischen dem Bodenteil der Preformen und dem entsprechenden Bodenteil der Kühlhülsen ein Spalt von einigen Zehntel-Millimetern verbleibt, der mit der Kalibration aufgehoben werden kann.

### Kurze Beschreibung der Erfindung

Die Erfindung wird nun anhand einiger Ausführungsbeispiele mit weiteren Einzelheiten erläutert.

Es zeigen:
- die Figur 1: schematisch die neue Erfindung in einer Bereitschaftsstellung vor der Kalibration der Preformen;
- die Figur 2a: den Beginn der Einfahrbewegung eines Nippels in eine Preform in größerem Maßstab;
- die Figur 2b: eine optimale Positionierung eines Nippels in einer im wesentlichen zylindrischen Preform;
- die Figur 3a: die Figur 2b in größerem Maßstab;
- die Figur 3b: den Nippel mit einem Press- bzw. Dichtring zusammengequetschtem bzw. aufgebauchtem Zustand in der Funktion eines Kalibriernippels, wobei der Innenraum des Preform-Blasteiles für einen adäquaten Druckaufbau, beispielsweise von einem halben bar, luftdicht verschlossen ist;
- die Figur 4a: eine anders gestaltete dickwandige Preform mit entsprechender Positionierung des Nippels bzw. des Dichtringes;
- die Figur 4b: die Lösung gemäß Figur 4a, jedoch ist der Blähdruck abgelassen und der Dichtring entlastet;
- die Figur 4c: die Entnahme einer Preform mittels des Nippels in der Funktion eines Haltenippels;
- die Figur 5: schematisch ein Beispiel für einen ersten Lösungsweg mit einem zusätzlichen Nachkühler;
- die Figur 6: schematisch ein Beispiel für einen zweiten Lösungsweg, bei dem der Entnahmeroboter als Nachkühler ausgebildet ist;
- die Figur 7a: eine Lösung mit einer mechanischen/pneumatischen Aktivierung der beiden Halteschultern mit zwei Pneumatikkolben;
- die Figur 7b: den Nippel der Figur 7a in vergrößertem Maßstab mit einem schwimmend angeordneten Press- bzw. Dichtring;
- die Figur 8: eine Lösung mit einem aufblasbaren Press- bzw. Dichtring sowie einem Überdruckventil zur Sicherstellung des Blähdruckes in dem Pressring bzw. Dichtring;
- die Figur 9: eine Lösung mit einem aufblasbaren Press- bzw. Dichtring mit zwei getrennten Zuführungen für das Druckmedium für den Blähdruck sowie für das Kalibrieren;
- die Figur 10: zeigt einen Nippel, positioniert in einer Kühlhülse mit übertrieben dargestellter Schräglage, wobei der Dicht- bzw. Pressring aufgebaucht ist in der Funktion eines Kalibriernippels. Die Figur 10 zeigt eine erste Ausgestaltung der Befestigung der Nippel an der Hilfseinrichtung;
- die Figur 11: zeigt eine zweite Ausgestaltung der Befestigung der Nippel an der Hilfseinrichtung;
- die Figur 12a: zeigt eine Außenkühlung des Übergangsbereiches zwischen Gewindeteil und Blasteil der Preformen;
- die Figur 12b: zeigt einen Teilausschnitt der Figur 12a in größerem Maßstab;
- die Figur 12c: zeigt einen optimal eingeführten Nippel gemäss den Figuren 12a und 12b;
- Die Figur 13a: zeigt eine Luft-Außenkühlung bei einer Preform mit einem sich erweiternden Halsteil, wobei die Figur 13b eine Ausschnittsvergrößerung ist;
- Die Figuren 14a, 14b und 14c: zeigen nochmals sehr schematisch einen optimalen Eindringort der Press- bzw. Dichtringe sowie der Außenkühlung, wobei in den Figuren 14b und 14c zusätzlich eine Luftaußenkühlung der heiklen, nicht gestützten Bereiche stattfindet.

### Wege und Ausführung der Erfindung

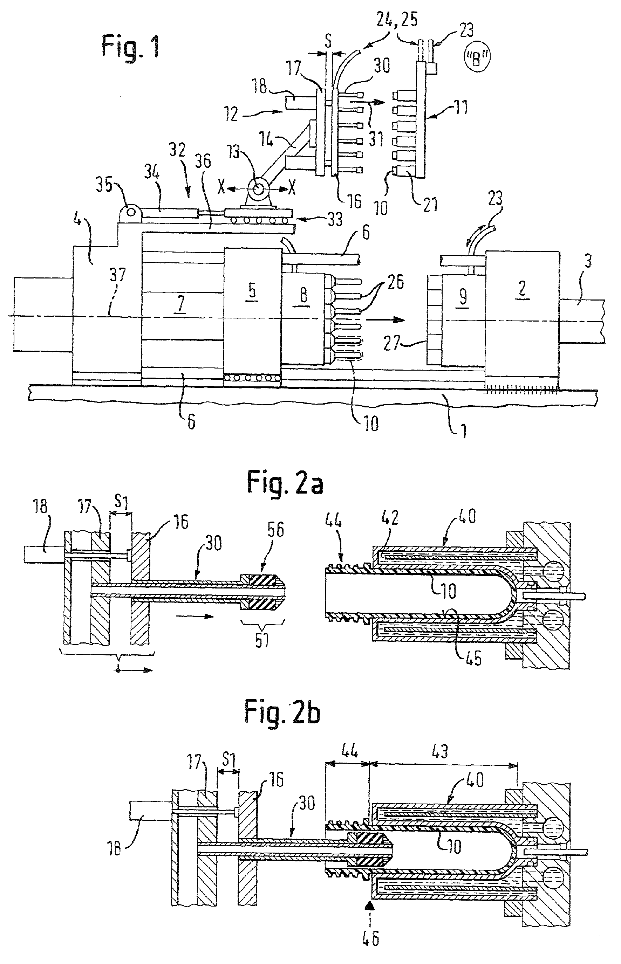

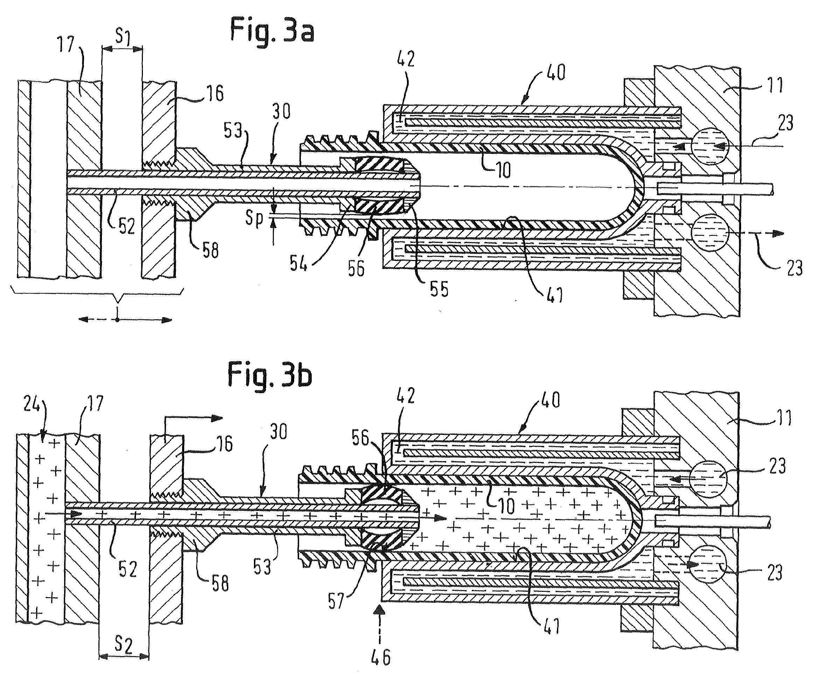

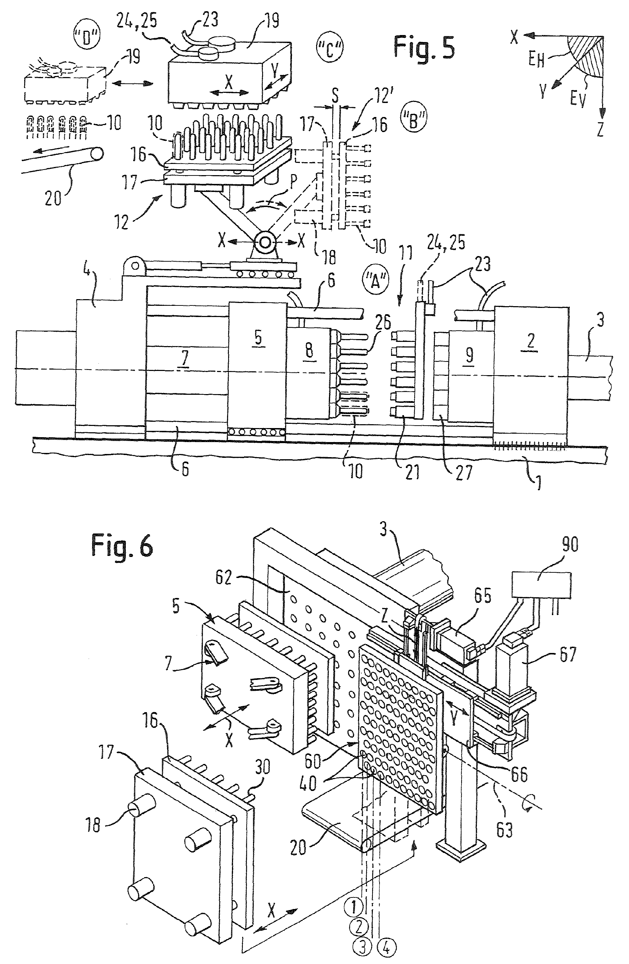

Die Figuren 1 und 5 zeigen schematisch eine Spritzgießmaschine für Preformen mit folgenden Hauptelementen: ein Maschinenbett 1, auf dem eine Abstützplatte 4 und eine feste Formaufspannplatte 2 und eine Spritzeinheit 3 gelagert sind. Eine bewegliche Formaufspannplatte 5 ist axial verschieblich auf dem Maschinenbett 1 abgestützt. Die beiden Platten 2 und 4 sind durch Holme 6 miteinander verbunden, welche durch die bewegliche Formaufspannplatte 5 hindurchgeführt sind. Zwischen der Abstützplatte 4 und der beweglichen Formaufspannplatte 5 befindet sich eine Antriebseinheit 7 zur Erzeugung des Schließdruckes. Die feste Formaufspannplatte 2 und die bewegliche Formaufspannplatte 5 tragen je eine Formhälfte 8 und 9, zwischen denen eine Vielzahl von Kavitäten bildbar sind zur Erzeugung einer entsprechenden Zahl hülsenförmiger Spritzgießteile. Die Spritzgießteile 10 werden in den Kavitäten zwischen Dornen 26 sowie Kavitäten 27 hergestellt. Nach dem Öffnen der Formhälften 8 und 9 haften die hülsenförmigen Spritzgießteile 10 an den Dornen 26. Die gleichen Spritzgießteile 10 im fertig gekühlten Zustand sind in der Figur 5 links oben dargestellt, wo sie gerade aus einer Nachkühleinrichtung 19 abgeworfen werden. Die oberen Holme 6 sind zum Zweck der besseren Darstellung der Einzelheiten zwischen den geöffneten Formhälften unterbrochen dargestellt. Gemäß der Lösung nach den Figuren 1 und 5 sind die vier Verfahrensschritte für die Spritzgießteile 10 nach Abschluss des Spritzgießprozesses entsprechend einem ersten Lösungsweg folgende:
"A" ist die Entnahme der Spritzgießteile oder Preformen 10 aus den beiden Formhälften. Die noch plastischen Teile werden dabei von einer im Raum zwischen den geöffneten Formhälften abgesenkten Entnahmevorrichtung 11 aufgenommen (Figur 1) und mit dieser in die Position "B" angehoben (Figur 5).
"B" ist die Phase der Kalibration und der Intensivkühlung (Figur 3b).
"B" / "C" ist die Übergabe der Preformen 10 von der Entnahmevorrichtung 11 an einen Transfergreifer 12 sowie die Übergabe der Preformen 10 von dem Transfergreifer 12 an eine Nachkühleinrichtung 19, entsprechend dem ersten Lösungsweg (Figur 5).
"D" ist der Abwurf der abgekühlten und in einen formstabilen Zustand gebrachten Preformen 10 aus der Nachkühleinrichtung 19 (Figur 5).

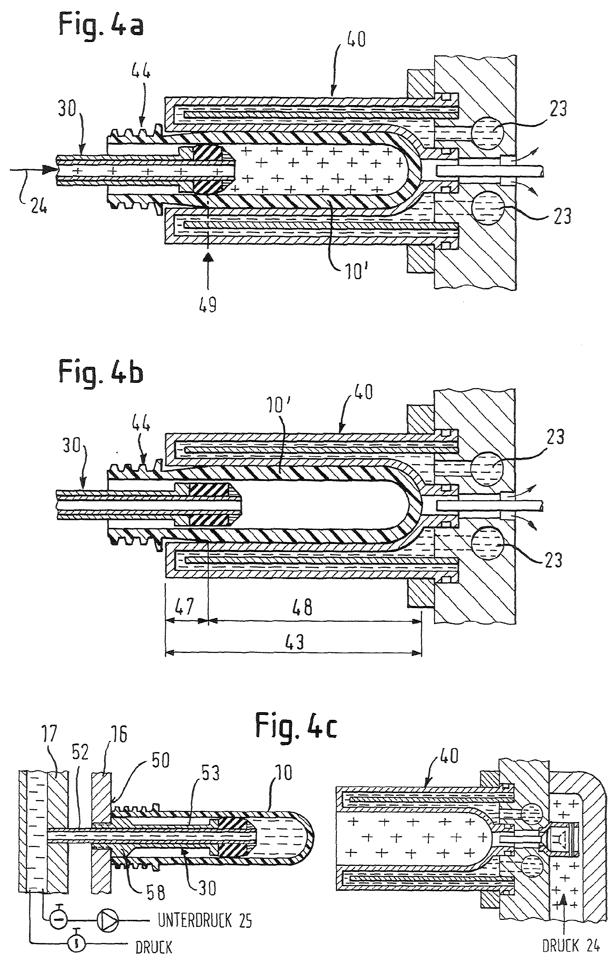

Die Figuren 1 und 5 zeigen sozusagen Momentaufnahmen der Hauptschritte für das Handling gemäß dem ersten Lösungsweg. In der Position "B" werden die senkrecht übereinander liegend angeordneten Spritzgießteile 10 von dem Transfergreifer 12 bzw. 12' übernommen und durch Verschwenken der Transfervorrichtung in Richtung des Pfeils P in eine stehende Position, gemäß Phase "C", gebracht. Der Transfergreifer 12 besteht aus einer um eine Axe 13 schwenkbaren Plattform 17, die eine Betätigungsplatte 16 trägt, welche im Parallelabstand zueinander angeordnet sind. Die Betätigungsplatte 16 ist parallel zur Plattform 17 über einen Antrieb bzw. über Verstellmittel 18 ausstellbar, so dass in der Position "B" die hülsenförmigen Spritzgießteile 10 aus der Entnahmevorrichtung 11 geholt und in der in die Position "C" geschwenkten Lage in die darüberliegende Nachkühleinrichtung 19 geschoben werden können. Die jeweilige Übergabe erfolgt durch Veränderung des Abstandes "S" zwischen der Betätigungsplatte 16 und der Plattform 17. Die noch heißen Spritzgießteile 10 werden in der Nachkühleinrichtung 19 fertiggekühlt und nach einer Verschiebung der Nachkühleinrichtung 19 in der Position "D" ausgestoßen und auf ein Förderband 20 geworfen. Das Bezugszeichen 23 bezeichnet die Wasserkühlung mit entsprechenden Zu- bzw. Abführleitungen, welche zur Vereinfachung mit Pfeilen angedeutet sind und als bekannt vorausgesetzt werden. Die Bezugszeichen 24 / 25 bezeichnen die Luftseite, wobei 24 für das Einblasen resp. die Druckluftzufuhr und 25 für das Vakuum resp. Luftabsaugen steht (Figuren 4a und 4c).

Die Figur 1 zeigt eine Situation nach dem Ausfahren der Entnahmevorrichtung 11 aus den offenen Formhälften 8 und 9 und den Beginn der Kalibration sowie der Intensivkühlung. Dabei ist die Plattform 17 mit den Nippeln 30 bereits in einer Bereitschaftsstellung für eine Einfahrbewegung in die Preformen 10 gemäß Pfeil 31. Die Plattform 17 ist über einen Arm 14 auf eine Verschiebevorrichtung 32 und Linearführungsschienen 33 auf einer Tragkonsole 36 abgestützt und wird über einen Linearantrieb 34 parallel zur Maschinenachse 37 bewegt. Der Linearantrieb 34 ist rückseitig an einer Lasche der Abstützplatte 4 verankert. Mit der Aktivierung des Linearantriebes 34 werden die Nippel 30 auf die Entnahmevorrichtung 11 zu- oder wegbewegt (gemäß Pfeil 31). Der Betätigungsplatte 16 sind Verstellmittel 18 zugeordnet, welche als einzige Funktion das Zusammenquetschen und Entlasten der Press- bzw. Dichtringe 56 haben.

In der Folge wird auf die Figuren 2a und 2b Bezug genommen: Die Figur 2a zeigt die Situation gemäß Figur 1, also den Beginn der Einführbewegung eines Nippels 30 in die Preform 10, welche sich in einer Entnahmehülse 40 befindet. Das Blasteil 43 der Preform 10 liegt, mit Einschluss des verschlossenen Bodenteiles, satt an der Innenwand 45 der Entnahmehülse 40 an. Das Gewindeteil 44 ragt aus der Entnahmehülse 40 heraus. Das Gewindeteil 44 ist in Bezug auf die gesamte Nachkühlung der Preform 10 weniger problematisch als das Blasteil 43. In aller Regel hat das Gewindeteil 44 in den nachfolgenden Verfahrensstufen (Nachkühl- und Blasprozess) nur noch eine Handlingsfunktion. Vom Blasteil 43 wird dagegen eine maximale Maßgenauigkeit, sowohl für das Handling wie auch für das Blaswerkzeug, verlangt. Das Blasteil 43 ist, bedingt durch die langgestreckte Hohlform, viel stärker gefährdet in Bezug auf Formschäden. Das kurze Gewindeteil 44 ist mit den Gewindegängen verstärkt. Die Figur 2b zeigt eine Situation, bei der der Nippel 30 an eine optimale Dichtstelle 46 eingefahren ist. Die optimale Dichtstelle 46 liegt am offenen Ende der Entnahmehülse 40.

Die Figuren 3a und 3b zeigen die Funktion eines Nippels als Kalibrierdorne 30. Die Figur 3a entspricht der Figur 2b. Beide stellen das Ende der Einführbewegung des Kalibrierdornes bzw. Nippels 30 in die Preformen 10 dar. Zwischen dem Blaskopf 51 sowie der Innenform der Preform besteht ein genügendes Spiel "Sp", damit der Blaskopf 51 (Fig. 2) ohne Beschädigung der Oberfläche der Preforminnenseite eingeführt werden kann. Der ganze Kalibrierdorn 30 besteht aus einem Stützrohr 52 sowie einer in Bezug auf das Stützrohr 52 längsverschiebbaren Presshülse 53 mit einem Press- bzw. Dichtring 56. Am äußeren Ende des Stützrohres 52 befinden sich Stützkörper 54, 55. Zwischen den Stützkörpern 54, 55 befindet sich ein hochelastischer Gummikörper bzw. Dichtring 56, der unbelastet im Wesentlichen eine kurze zylindrische Form hat. Nachdem der Blaskopf 51 seine Position 46 erreicht hat, wird durch ein mechanisches nach Vorneschieben der Presshülse 53 der Press- bzw. Dichtring 56 zwischen den Stützkörpern 54, 55 zusammengequetscht, sodass sich der Pressring bzw. Dichtring 56 aufbaucht (Figur 3b). Mit dem Aufbauchen wird ein Dichtschluss erzeugt, analog zu dem Verschluss von Thermosflaschen. Sobald der Dichtschluss hergestellt ist, wird über das Stützrohr 52 Druckluft in das Innere der Preform 10 eingeblasen und ein minimaler Innendruck erzeugt, was mit dem +-Zeichen angedeutet ist. Der Innendruck hat zur Folge, dass die noch plastischen Preformen 10 vollständig satt an die Innenfläche der Kühlhülsen anliegen und einen idealen Wärmeübergang bilden. Die Figur 3b zeigt das Aufbauchen des Gummikörpers bzw. Dichtringes 56. Die Dichtstelle an dem Dichtring ist mit den Bezugszeichen 57, 57', 57" bezeichnet.

Aus dem Gesagten ergibt sich, dass für die Preformen 10 vom Augenblick der Entnahme aus den offenen Formhälften
- jederzeit bestmögliche Kühlverhältnisse bestehen;
- die Preform wird, abgesehen von einem kurzen Unterbruch, unmittelbar nach dem Überschieben aus den offenen Formhälften in die Kühlhülsen bis zum Einfahren der Nippel während der Kalibrationsphase an die inneren Kühloberflächen der Entnahmehülsen 40 angepresst;
- der kurze Unterbruch für ein hundertprozentiges Anliegen der Preform 10 wird durch die viel länger dauernde Kalibrierung wieder wettgemacht;
- nach der Kalibration sind die Preformen 10 allseits bereits in einem formstabilen Zustand. Die Preformen 10 bleiben deshalb nach der Kalibration bis zum fertig gekühlten Zustand in ihrer äußeren geometrischen Form maßhaltig.

Bei maximaler Auslegung der Wasserkühlkreisläufe
==> in den Spritzgießformen,
==> im Bereich der Spritzgießkavitäten und im Spritzgießdorn sowie
==> in der Entnahmehülse
   wird eine maximale Intensivwirkung erzeugt. Es ist dabei nicht das Ziel, innerhalb eines Spritzgießzyklus die Preformen 10 fertig zu kühlen. Es wird jedoch angestrebt, die Preformen 10 bis zum Ende der zwei bis drei Mal länger dauernden Nachkühlung in einen schütt-, lager- und transportfähigen Zustand zu bringen.

Daraus ergeben sich große Vorteile:
==> die Voraussetzung für eine extreme Verkürzung der Zykluszeit,
==> damit eine weitere Steigerung der Produktivität der Spritzgießmaschine,
==> eine maximale Maßhaltigkeit der Preformen
==> sowie bestmögliche qualitative Eigenschaften der Preformen, beispielsweise auch in Bezug auf die Kristallinität, Maßhaltigkeit und Schadenfreiheit.

Die Figuren 4a und 4b zeigen eine andere äußere Gestalt einer Preform 10'. Es handelt sich um eine dickwandige Preform, welche in dem halsartigen Übergang des Blasteiles 43 zu dem Gewinde einen verjüngenden Übergang 47 aufweist. Weil die Preform 10' in Achsrichtung der Entnahmehülse 40 eingeschoben und entnommen wird, fehlt im Bereich des halsartigen Überganges eine Stützung für das entsprechende Blasteil 47. Der Nippel 30 wird deshalb an eine Dichtstelle 49 in dem Übergang zwischen dem konischen Übergang 47 sowie dem zylindrischen Blasteil 48 positioniert.

Die Figur 4c zeigt die Entnahme der Preformen 10 aus den Entnahmehülsen 40 mittels der Nippel 30 in der Funktion als Haltenippel. Über den Nippel 30 wird der Innenraum des Blasteiles auf Unterdruck gesetzt, bzw. die Preform 10 wird an den Nippel 30 angesaugt (-Zeichen). An dem Stützrohr 52 ist am hinteren Ende ein Zentrierring 58 angebracht, welcher genau zu dem offenen Ende des Preforms 10 passt, zum exakten Halten der Preformen auf den Nippeln 30. Auf der Gegenseite der Preform 10 wird Druckluft auf das geschlossene Preformende gegeben (+Zeichen). Die Preform 10 geht auf Anschlag 50 zu der Betätigungsplatte 16 und kann der Entnahmehülse 40 vollständig entnommen und beispielsweise dem Nachkühler 19 übergeben werden oder gemäß dem zweiten Lösungsweg durch Umschalten auf Druckluft abgeworfen werden.

Die Figur 5 zeigt eine Station am Ende des Spritzvorganges mit geöffneten Formhälften 8 bzw. 9. Die Temperatur der Preformen 10 wurde im Werkzeug mit maximaler Kühlwirkung abgesenkt. Die Preformen 10 dürfen durchaus noch forminstabil sein, derart, dass sie bei sofortigem Abwurf nach der Formöffnung bei geringster äusserer Krafteinwirkung in sich zusammenfallen könnten. Am Ende des Spritzvorganges ist die Entnahmevorrichtung bereits in Startposition (Figur 1) und kann nach der Formöffnung ohne Zeitverzug zwischen die offenen Formhälften abgesenkt werden (Figur 5). Bei der in der Figur 5 gezeigten Lösung wird eine unabhängige Nachkühleinrichtung 19 eingesetzt, in der die noch heissen Preformen 10 während 3 bis 4 Spritzgiesszyklen fertig gekühlt werden. Ein Transfergreifer 12 übergibt in der Phase "B" / "C" der Figur 5 die Preformen 10 an die Nachkühleinrichtung 19. Die Nachkühlung der Preformen findet in wassergekühlten Hülsen statt.

In der Figur 5 ist die Horizontalebene mit EH und die Vertikalebene mit EV bezeichnet. Die Horizontalebene EH wird durch die beiden Koordinaten X und Y und die Vertikalebene durch die Koordinaten Y und Z definiert. Die Z-Koordinate ist vertikal, und die X-Koordinate ist quer dazu ausgerichtet. Der Transfergreifer 12 führt eine Verschwenkbewegung sowie eine Linearbewegung in der X-Koordinate durch. Der Transfergreifer 12 kann zusätzlich mit einer gesteuerten Bewegung in der Y-Koordinate ausgebildet werden. Weil der Transfergreifer 12 bereits eine gesteuerte Bewegung der X-Koordinate hat, kann die Exaktpositionierung der auf den Nippeln 30 des Transfergreifers 12 befindlichen Preformen 10 in X-Richtung durch eine entsprechend gesteuerte / geregelte Bewegung durchgeführt werden. Für die Übergabe der Preformen 10 an den Nachkühler 19 wird in diesem Fall der Nachkühler 19 in X-Richtung auf eine fixierte Position gefahren, der Transfergreifer 12 in der Y-Richtung gesteuert / geregelt und in die jeweils gewünschte Position gebracht. Bei der bevorzugten Ausgestaltung sind die Bewegungsmittel für den Nachkühler 19 für die zwei Koordinaten X und Y zur exakten Positionierung für die Übergabe der Preformen 10 steuer- / regelbar. Dabei wird der Transfergreifer 12 jeweils in eine fixe Übergabeposition gesetzt.

Es wird zu diesen Ausführungen auf die WO 2004 / 041510 Bezug genommen.

Ein weiterer wichtiger Aspekt des neuen Verfahrens liegt darin, dass die Entnahmehülsen 40 eine maximale Umlaufkühlung 42 aufweisen, und dass zwischen der Preformaussenseite sowie der Kühlkavität 41 ein optimaler Kontakt hergestellt wird. Dazu wird die Preform 10 mit Kraft in die Kühlkavität 41 gleichsam eingepresst (Figur 4b). Die Preform 10 wird so weit in die Kühlkavität 41 eingeschoben, bis das ganze Blasteil 43, mit Einschluss des Bodenteils, satten Wandkontakt hat. Die Figur 6 zeigt ein Nachkühlkonzept in Kompaktbauweise gemäss zweitem Lösungsweg. Auf Seiten der Spritzgiessmaschine kann die Lösung derjenigen der Figur 5 entsprechen, weshalb die gleichen Teile mit den selben Bezugszeichenversehen sind. Ein Nachkühler 60 mit einer Vielzahl von Kühlhülsen 21 weist eine senkrechte Übernahmeebene auf, d.h. eine Ebene innerhalb der Koordinaten Y und Z. In der dargestellten Position sind die beiden Formhälften 8 und 9 in geöffnetem Zustand, sodass der Nachkühler 60 in den freien Zwischenraum 62 zwischen den Formhälften einfahren kann. Der Nachkühler 60 hat insgesamt drei Bewegungsaxen, eine Horizontalbewegungsaxe in der Y-Koordinate, eine Vertikalbewegungsaxe in der Z-Koordinate sowie eine Drehaxe 63, welche von einer Maschinensteuerung 90 koordiniert werden. Die Drehaxe 63 dient lediglich dem Abwurf der fertig gekühlten Vorformlinge 10 auf ein Transportband 20. Die Drehaxe 63 ist gegenüber einer Grundplatte gelagert. Bewegungsmittel für die Vertikalbewegung ist ein Vertikalantrieb 65. Der Vertikalantrieb 65 ist gleitfähig auf einer Grundplatte 66 eines Horizontalantriebes 67 angeordnet. Der Horizontalantrieb 67 weist einen AC-Servomotor mit vertikaler Axe auf. Die Grundplatte 66 ist über vier Gleitkörper auf zwei parallelen Gleitschienen hin- und herbewegbar gelagert. Die Grundplatte 66 weist auf der rechten Bildseite ein senkrecht nach oben gerichtetes Grundplattenteil auf, an welchem der Vertikalantrieb 65 verankert ist. Der Vertikalantrieb 65 weist ebenfalls einen AC-Servomotor mit horizontaler Axe auf.

Die Nachkühleinrichtung gemäss Figur 6 weist mehrere parallel angeordnete Reihen auf. Beim gezeigten Beispiel sind in einer senkrechten Reihe jeweils 12 Kühlhülsen 21 dargestellt. Die Kühlhülsen 21 können in Bezug auf die Verhältnisse in den Spritzgiess-Formteilen sehr viel enger angeordnet werden. Es werden deshalb nicht nur mehrere parallele Reihen, sondern es wird zusätzlich eine Versetzung der Reihen vorgeschlagen. Dies bedeutet, dass für einen ersten Spritzgiesszyklus die Kühlrohre mit Nummern 1, für einen zweiten Spritzgiesszyklus die Kühlrohre mit Nummern 2, usw. bezeichnet werden. Sind im Beispiel mit vier Parallelreihen alle Reihen mit Nr. 3 gefüllt, werden die Reihen mit Nr. *1*, wie beschrieben, für ein Ausstossen auf das Förderband 20 vorbereitet. Der Rest verläuft übe die ganze Produktionszeit sinngemäss. Im gezeigten Beispiel liegt die gesamte Nachkühlzeit in der Grössenordnung von drei bis viermal der Spritzgiesszeit. Die Luftdruck- bzw. Unterdruckverhältnisse in der Nachkühleinrichtung 19 müssen reihenweise steuerbar sein, damit zu einem Bestimmten Zeitpunkt alle Reihen *1* bzw. 2, usw. gleichzeitig aktiviert werden können. Neben der Genauigkeit der Wegregelung des Nachkühlers 19 sowie der Plattform 17 ist es wichtig, dass die Beschleunigungs- und Verzögerungsfunktionen optimal gesteuert werden. Die Visualisierung findet in einem Kommandogerät der Maschinensteuerung resp. des Maschinenrechners 90 statt. Die Bewegungsabläufe können in jeder Hinsicht optimiert werden. Dies betrifft beispielsweise Start und Stopp, vor allem aber auch Beschleunigungen und Verzögerungen im Hinblick auf Geschwindigkeit und Weg. Die Figur 6 lässt für die Entnahme der Preformen 10 aus dem Nachkühler 19 bzw. Entnahmeroboter 60 eine weitere Möglichkeit zu. Die Preformen 10 können mit den Nippeln 30 aus den Kühlhülsen 21 entnommen und auf das Förderband 20 abgeworfen werden. Betreffend Ausgestaltung des Nachkühlers 19 wird auf die EP 1 312 159 Bezug genommen.

Ein wichtiger Aspekt der neuen Lösung liegt darin, dass die Preformen 10 vor der Kalibration satt bis zum Aufliegen des geschlossenen Preformbodens in die Entnahmehülsen 40 eingeführt werden. Die Nippel 30 haben für die Einführung der Preformen 10 in die Entnahmehülsen 40 keine Funktion.

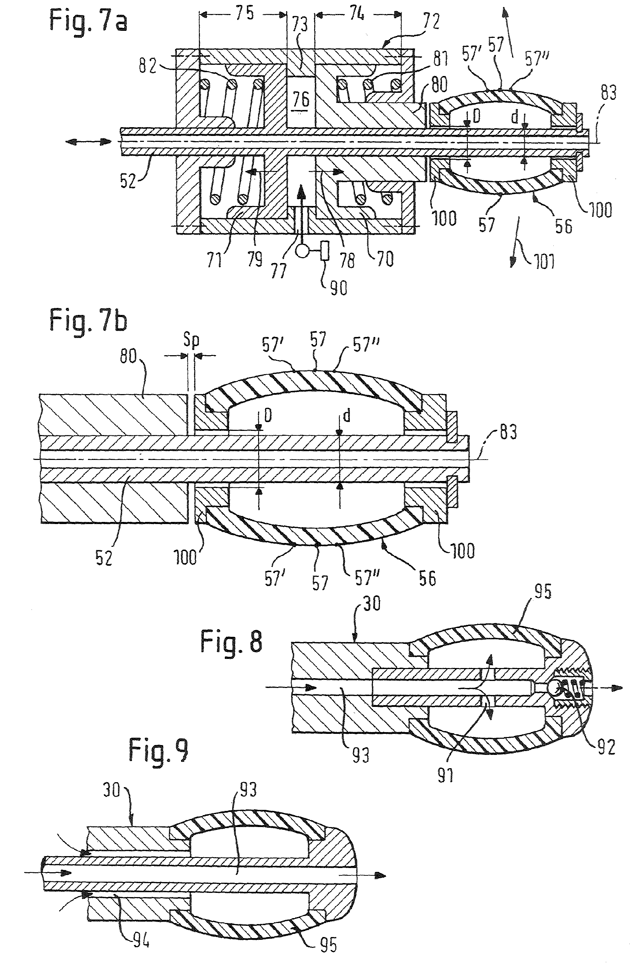

Die Figur 7a zeigt eine weitere Ausgestaltung für das Aufbauchen der Press- bzw. Dichtringe 56. Die Hubbewegung für die beiden Halteschultern 54, 55 wird durch zwei kleine Pneumatikkolben 70, 71 erzeugt, welche in einem Pneumatikzylinder 72 angeordnet sind. Der Pneumatikzylinder 72 ist mit einer ringförmigen Schulter 73 in eine vordere Zylinderseite 74 sowie eine hintere Zylinderseite 75 aufgeteilt. Zwischen den beiden Zylinderseiten besteht eine Luftkammer 76, in welche über eine Zufuhrbohrung 77 Pressluft zugeführt wird. Die Pressluftzufuhr wird über eine Steuerung im Rahmen des Spritzgiesszyklusablaufes zugeführt bzw. wieder abgelassen. Die Pneumatikkolben 70, 71 werden bei Zuführung der Pressluft gemäss den Pfeilen 78 resp. 79 bewegt, sodass über das Verbindungsstück 80 die Halteschultern 54, 55 um je einen halben Hub aufeinander zubewegt und der Press- bzw. Dichtring 56 aufgebaucht wird. Bevorzugt wird der Press- bzw. Dichtring 56 aus Silikongummi hergestellt. Der Silikongummi hat eine genügende Elastizität und ist langzeitstabil. Um auch über einen längeren Zeitraum eine klar definierte Funktion des Press- bzw. Dichtringes 56 zu gewährleisten, ist für jeden Pneumatikkolben 70, 71 eine Rückstellfeder 81 resp. 82 vorgesehen, welche nach jeder Dichtphase den Press- bzw. Dichtring 56 in die Ruhelage zurückschiebt. Die Halteschultern 54, 55 erhalten für den ganzen Greifer eine Gleichlauffunktion. Das Ergebnis ist, dass die ringförmigen Dichtstellen 57 während der aktiven Einleitung der Dichtung keinerlei Verschiebung in Richtung der Axe 83 erfahren. Dadurch wird jede örtliche Belastung in Längsrichtung des Preformquerschnitts vermieden. Wenn die Rückstellfeder 81 etwas stärker ausgebildet ist, wird am Ende der Kalibrierphase eine leichte Ausziehkraft auf die Preform 10 übertragen. Damit wird der Start der Ausziehbewegung begünstigt.

Die Figur 7b zeigt das Einführteil des Nippels 30 gemäss der Figur 7a in grösserem Massstab. Das typische Merkmal ist die schwimmende Lagerung des Press- bzw. Dichtringes 56. Die Figuren 7a und 7b zeigen aufgrund der bisherigen Untersuchungen die Bestform eines Nippels 30 mit Press- bzw. Dichtringen 56. Der Pressring 56 ist auf beiden Endseiten mittels loser Stützringe 100 gehalten. Die beiden losen Stützringe 100 weisen einen inneren Durchmesser "D" auf, der um ein geringes Spiel grösser ist als der Aussendurchmesser "d" des Stützrohres 52. Auch in Längsrichtung besteht Spiel "Sp" zwischen dem Stützring 100 und dem Verbindungsstück 80. Damit bekommt der Press- bzw. Dichtring 56 im inaktiven Zustand eine Bewegungsfreiheit im Sinne eines leichten Taumelns oder Schwimmens gemäss Pfeil 101. Es ergibt sich automatisch eine optimale ringförmige Dichtstelle 57, 57' oder 57" an dem Press- bzw. Dichtring 56.

Die Figur 8 zeigt einen Nippel 30 mit einem aufblasbaren Dichtring 95. Ueber eine Querbohrung 91 zum Luftkanal 93 wird Druckluft in das Innere des Dichtringes 95 zugeführt, sodass sich dieser aufbaucht. Zur Sicherstellung eines genügenden Blähdruckes ist am Austrittsende des Nippels 30 ein federbelastetes Überdruckventil 92 angeordnet. Sobald der Innendruck den eingestellten Luftdruck für das Aufbauchen des Dichtringes 95 übersteigt, wird über das Überdruckventil Druckluft in das Blasteil der Preform 10 gepresst.

Die Figur 9 zeigt eine Variante zur Figur 8. Das Druckmedium für das Aufbauchen des Dichtringes 95 wird über einen separaten Luftkanal 94 zugeführt. Damit fällt das Überdruckventil weg. Der Vorteil der Lösung gemäss Figur 9 liegt darin, dass zwei unterschiedliche Medien für den Dichtring 95 bzw. für den Blähdruck verwendet werden können. Dies kann beispielsweise Vorteile im Hinblick auf eine zusätzliche Kühlwirkung haben.

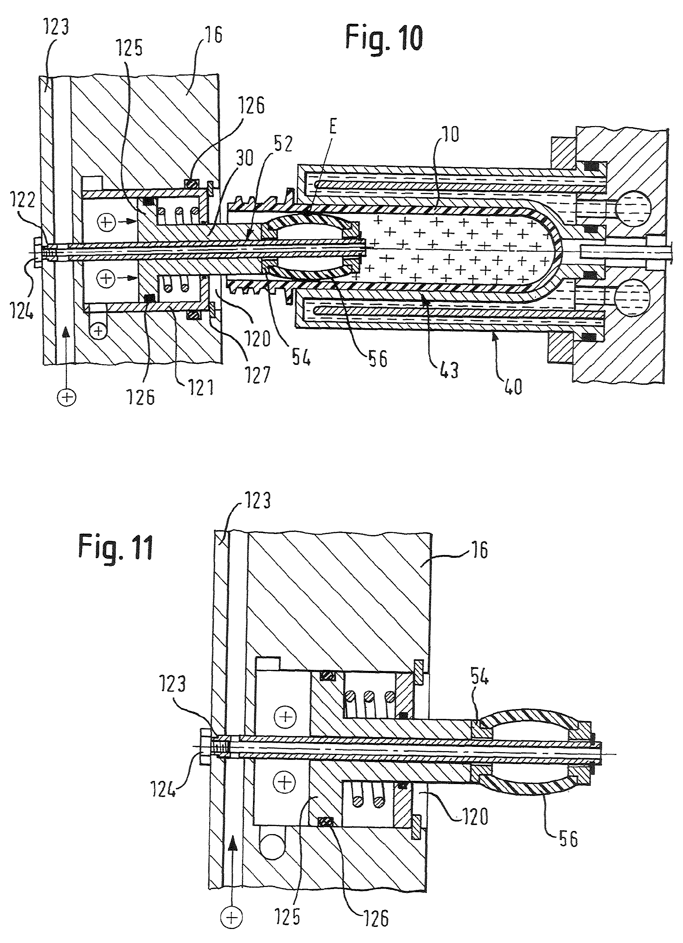

Die Figur 10 ist im Hinblick auf allfällige Ungenauigkeiten der Lage der Nippel 30 völlig überzeichnet dargestellt. Der grosse Vorteil liegt darin, dass durch diese Schräglage örtliche Druckstellen zwischen dem Press- bzw. Dichtring 56 sowie der Preform 10 vermieden werden. Der Press- bzw. Dichtring 56 passt sich in jedem Fall der Preforminnenseite an.

In der Figur 10 ist ein Nippel 30 in völlig überzeichneter Schräglage dargestellt. Aus dieser bildlichen Ueberzeichnung erkennt man, dass eine solche "Schräglage" keinen negativen Einfluss haben würde, da sich der Press- bzw. Dichtring 56 aufgrund des zuvor beschriebenen Spieles automatisch anpasst. Mit dem Buchstaben "E" ist der optimale Bereich für den Press- bzw. Dichtring 56 angedeutet, in welchem eine Aktivierung erfolgt. Die Figur 10 zeigt die Abstützung eines Nippels 30 an einer Betätigungsplatte 16. In der Betätigungsplatte 16 ist in einer Bohrung 120 eine Zylinderbuchse. 121 angeordnet. Das innere Rohr 52 liegt über einen Absatz 122 auf einer Bodenplatte 123 der Betätigungsplatte 16 auf und ist mit einer Klemmschraube 124 fest verbunden. Innerhalb der Zylinderbuchse 121 befindet sich ein pneumatisch verschiebbarer Kolben 125. Mit dem Kolben 125 ist ein äusseres Rohrstück 30 verbunden, an dessen Ende eine Halteschulter 54 abgebracht ist. Die Zylinderbuchse 121 sowie das Rohrstück 30 sind nach aussen mit einem Gleitring 126 abgedichtet. Das Rohrstück 30 ist pneumatisch verschiebbar. Dagegen ist die Zylinderbuchse 121 über einen Seger- bzw. Klemmring 127 fest in der Bohrung 120 gehalten.

Der wesentliche Unterschied zwischen den Figuren 10 und 11 liegt darin, dass es in der Figur 11 keine Zylinderbuchse gibt. Der Kolben ist direkt in der Bohrung 120 beweglich und luftdicht geführt.

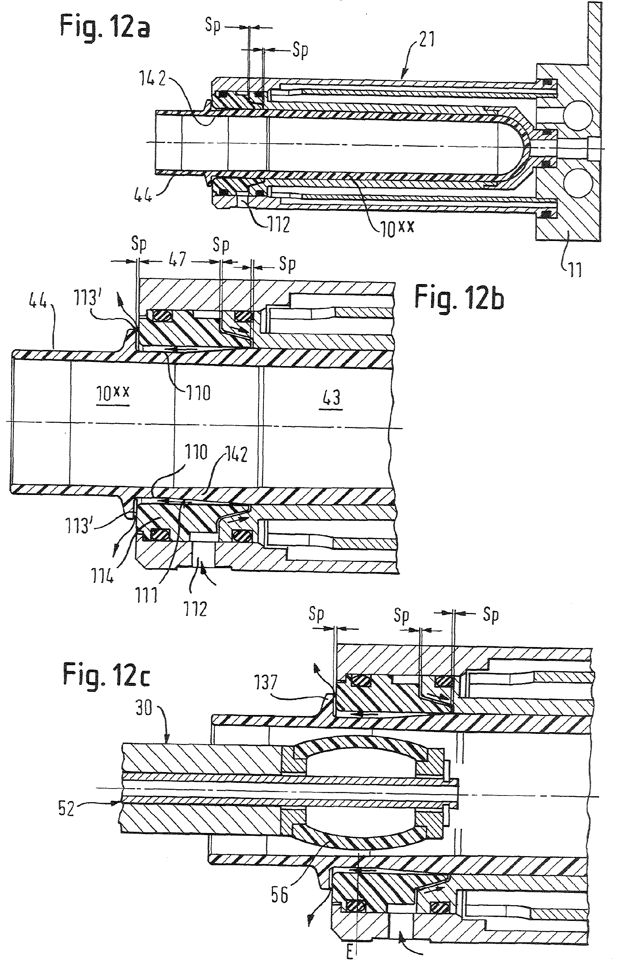

Die Figuren 12a, 12b und 12c zeigen eine Aussenkühlung der Preformen 10 in dem nicht unkritischen Uebergang 47 zwischen dem Gewindeteil 44 und dem Blasteil 43 (Figur 12b). Viele Preformen 10 weisen in diesem Abschnitt eine äussere konische Verjüngung 110 auf. Diese konische Verjüngung 110 ist isofern nachteilig, als der Bereich 47 der Verjüngung, der stützlos ist. Es besteht kein Kontakt mit der Innenwand 111 der Kühlhülsen. Ueber einen Luftanschluss 112 kann Kühlluft eingeblasen und über einen Kühlkanal 113, 113' wieder ins Freie abgelassen werden. Diese zusätzliche Kühlung hat den grossen Vorteil, dass sie vom ersten Moment der Uebergabe der Preformen 10 an die Kühlhülsen 21 und zusätzlich über die ganze Kalibrierzeit wirksam eingesetzt werden kann. Mit einer zusätzlichen Verfestigung der betreffenden Preformaussenseite wird einer mögliche Deformation durch die Anpresskraft des Press- bzw. Dichtringes 56 entgegengewirkt. Der auffallendste bauliche Unterschied zu einer "normalen" Kühlhülse liegt darin, dass im offenen Mündungsbereich ein Luftführungsring 114 angeordnet wird. Auf der Innenseite des Luftführungsringes 114 ist von der Stelle des Luftanschlusses 112 bis zur Abblasstelle 113' an die Umgebung rund um das betreffende Preformteil ein Kühlkanal angeordnet. Damit bestreicht die Kühlluft gezielt die ganze entsprechende Aussenseite der Preformen.

Aus der Figur 12c kommt der direkte Zusammenhang zwischen der Funktion der Nippel 30 als Kalibriernippel sowie des Abschnittes 47 der Preformen zum Ausdruck. Das konische Aussenteil der Preform 10 wird unmittelbar nach der Entnahme aus den Kühlhülsen 21 vorab speziell gekühlt und die äussere Wandschicht verfestigt. Dies gibt der ganzen Preform am verjüngenden Uebergang 47 eine grössere Formstabilität. Nach aussen ist der Luftführungsring 114 innerhalb des Kopfteiles der Kühlhülse 21 gehalten. Bei der Montage wird der Luftführungsring 114 mit den inneren Hülsen der Kühlhülse 21 gemäss Figuren 12a und 12b von rechts nach links eingeschoben.

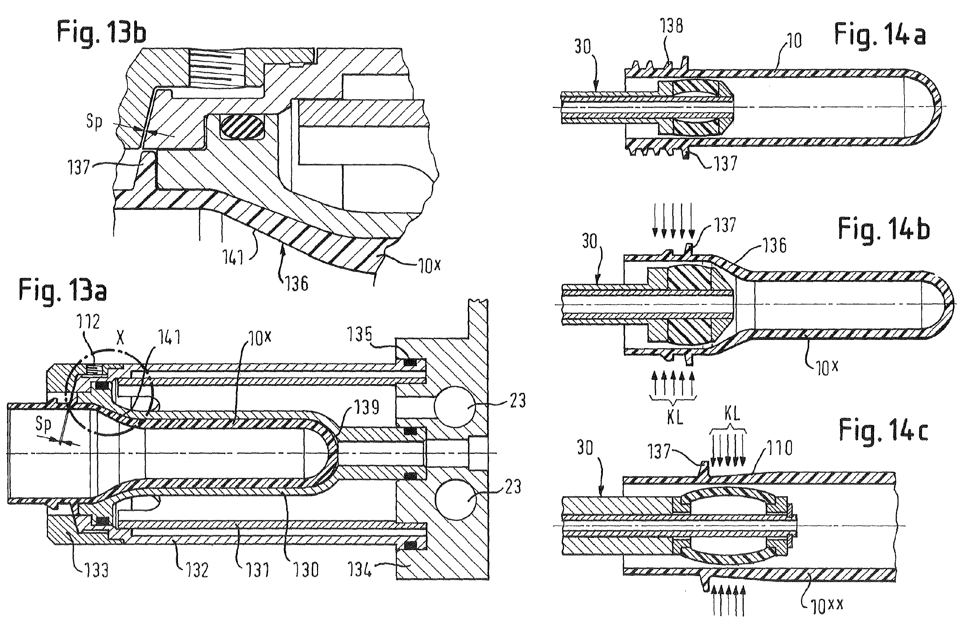

Die Figuren 13a und 13b zeigen eine Preform 10x mit einem konisch erweiterten Halsstück 136. Die Figur 13b ist eine Ausschnittssvergrösserung "X" der Figur 13a. Bei diesem Preformtyp gehört das erweiterte Halsstück bereits zum Blasteil und liegt während der Kalibration an der Innenwand der Kühlhülse 130 an. Die Kühlhülseninnenwand gibt der Preform (10x) die definitive äussere Form. Das ganze Blasteil der Preform (10x) liegt bis zum Neckring 137 an.

Die optimale Dichtstelle des Press- bzw. Dichtringes (56) liegt in dem Bereich des zylindrischen Abschnittes des Neckringes. Damit ist aber dieser Teil beim Aufbauchen des Press- bzw. Dichtringes (56) in Bezug auf Deformationen gefährdet, da dieser Teil von aussen nicht gestützt ist. Hier kommt die zusätzliche Aussenluftkühlung (KL), wie sie aus der Figur 14b ersichtlich ist, zum Tragen. Mit der Luftkühlung in dem Bereich zwischen dem Gewindeteil (44) sowie dem Neckring bekommt die äussere Haut der Preform (10x) eine etwas höhere Festigkeit, da die entsprechende Blaskühlung schon vor der Kalibration einsetzt.

Sinngemäss gilt dies auch bei einer Lösung gemäss Figur 14b bzw. 12c. Dagegen kann im Normalfall bei einem zylindrischen Blasteil auf eine Aussenkühlung verzichtet werden (Fig 14a).

Die Figur 13a zeigt noch einen weiteren interessanten Ausgestaltungsgedanken. Die Kühlhülse ist aus standardisierten Bauteilen zusammengesetzt und besteht aus einer inneren Kühlhülse 130, einer äusseren Kühlhülse 131 und einer Mantelhülse 132 sowie einem Kopfring 133, mit dem die Luftkanäle (Spalt Sp) gebildet werden. Je nach Gestalt der Preform (10x) wird die innere Kühlhülse (130) konzipiert und ein entsprechender Kopfring 133 bzw. 114 aufgesetzt. Mit 138 ist der unterste Gewindegang, mit 134 der Sockel einer Betätigungsplatte und mit 135 die Dichtringe bezeichnet.

Gemäss dem Beispiel der Figuren 13 a und 13 b ist die Kühlhülse 10x so konzipiert, dass nach dem Einschieben der Preformen in die Kühlhülsen am Bodenteil ein minimaler Spalt 139 von einigen Zehntel Millimetern verbleibt. Dagegen soll hier der Neckring 137 bereits beim Einschieben vollständig auf der Stirnseite der Kühlhülse 130 aufliegen.

## Patentansprüche

1. Hilfsvorrichtung, welche einen Greifer aufweist mit einer Vielzahl von Nippeln (30) mit je einem Einführteil, welches in hülsenförmige Spritzgiessteile (10) einführbar ist, welche in noch heißem, forminstabilem Zustand aus offenen Formhälften (8, 9) entnommen und an Entnahmehülsen bzw. Kühlhülsen (21) für eine Außenkühlung übergeben worden sind, wobei die Nippel (30) an einer gemeinsamen Betätigungsplatte (16) angeordnet sind, welcher gesteuerte Antriebsmittel für die Einfahr- und Ausfahrbewegung der Nippel (30) in bzw. aus den hülsenförmigen Spritzgießteilen (10) zugeordnet sind, **dadurch gekennzeichnet, dass** die Einführteile der Nippel (30) radial aufbauchbare Press- bzw. Dichtringe (56) aufweisen, welche in die hülsenförmigen Spritzgiessteile (10) einführbar sind,
dass beiden Seiten der Press- bzw. Dichtringe (56) in Axrichtung der Einführteile je eine Halteschulter (54, 55, 100) zugeordnet ist, welche für das Aufbauchen der Press- bzw. Dichtringe (56) relativ zueinander bewegbar sind, wobei die Press- bzw. Dichtringe (56) zwischen den beiden Halteschultern (54, 55, 100) zusammenquetschbar und analog zu einem Thermosflaschenverschluss mechanisch aufbauchbar sind und dass die Nippel (30) an einer gemeinsamen Betätigungsplatte (16) angeordnet sind, welcher gesteuerte Antriebsmittel für die Einfahr- und Ausfahrbewegung der Nippel (30) in bzw. aus den hülsenförmigen Spritzgießteilen (10) zugeordnet sind.

2. Hilfsvorrichtung nach Anspruch 1,
**dadurch gekennzeichnet,**
**dass** die Press- bzw. Dichtringe (56) in nicht aufgebauchtem Zustand in Bezug auf die axiale Ausrichtung der Nippel (30) leicht schwimmend gelagert sind.

3. Hilfsvorrichtung nach Anspruch 1 oder 2,
**dadurch gekennzeichnet,**
**dass** jeder Nippel (30) zwei relativ zueinander bewegbare Rohrstücke aufweist, an deren Ende je eine der Halteschultern (54, 55) angebracht ist.

4. Hilfsvorrichtung nach einem der vorstehenden Ansprüche,
**dadurch gekennzeichnet,**
**dass** wenigstens eine Halteschulter (54, 55) über einen pneumatisch betätigbaren Kolben (70, 71) bewegbar ist.

5. Hilfsvorrichtung nach einem der vorstehenden Ansprüche,
**dadurch gekennzeichnet,**
**dass** der bewegbaren Halteschulter (54, 55) für den Rückzug eine Rückstellfeder (81, 82) zugeordnet ist.

6. Hilfsvorrichtung nach einem der Ansprüche 3 bis 5,
**dadurch gekennzeichnet,**
**dass** wenigstens eines der relativ zueinander bewegbaren Rohrstücke einen an eine Druck- und / oder Saugluftquelle anschliessbaren Luftkanal (93) aufweist.

7. Hilfsvorrichtung nach einem der vorstehenden Ansprüche,
**dadurch gekennzeichnet,**
**dass** sie eine steuerbare Entnahmevorrichtung (11) aufweist, mit wenigstens einer Anzahl wassergekühlter Entnahmehülsen (40), entsprechend der Zahl Spritzgiesspositionen der Spritzgiessformen.

8. Verfahren zur Nachbehandlung von Preformen (10) mit einem Gewindeteil (44), einem Neckring sowie einem Blasteil (43),
- welche in noch heissem, forminstabilem Zustand aus den offenen Formhälften (8, 9) entnommen,
- an Entnahmehülsen bzw. Kühlhülsen (21) für eine Aussenkühlung übergeben
- und nach dem Einschieben an die Innenwand (45) der Entnahmehülsen bzw. Kühlhülsen (21) innerhalb der Zeitdauer eines Spritzgiesszyklus durch Druckluft angepresst und kalibriert werden,
**dadurch gekennzeichnet, dass**
a) für die Kalibration an Nippeln (30) angebrachte Press- bzw. Dichtringe (56) positionsgesteuert in jede der Preformen (10) in dem Bereich zwischen Gewindeteil (44) und Blasteil (43) eingeführt werden, wobei
b) die Press- bzw. Dichtringe (56) zwischen zwei relativ zueinander bewegbaren Halteschultern zusammengequetscht und bis zum Kontakt an die Innenwand der Preformen (10) analog zu einem Thermoflaschenverschluss mechanisch aufgebaucht werden, und wobei
c) durch Erzeugen einer radial in Richtung der Innenwand gerichteten Kraft der Innenraum jedes Blasteiles (43) nach aussen abgedichtet wird, und dass
d) die Blasteile (43) mittels über die Nippel (30) eingebrachte Pressluft an die Innenwand (45) angepresst und kalibriert werden.

9. Verfahren nach Anspruch 8,
**dadurch gekennzeichnet,**
**dass** die Press- bzw. Dichtringe (56) durch zwei relativ zueinander bewegbare Halteschultern (54, 55) aufgebaucht werden, wobei die Halteschultern (54, 55) zur Vermeidung einer axialen Verschiebung während der Dichtfunktion mit gleichem Hub aufeinander zubewegt werden.

10. Verfahren nach einem der vorstehenden Ansprüche,
**dadurch gekennzeichnet,**
**dass** nach der Kalibration die Preformen (10) mittels der Press- bzw. Dichtringe (56) mit aufgeblähten Dichtringen aus der Kühlhülse (21) ausgezogen und gegebenenfalls einem Nachkühler (19) übergeben werden.

11. Verfahren nach einem der vorstehenden Ansprüche,
**dadurch gekennzeichnet,**
**dass** für die Kalibration an Nippeln (30) angebrachte Press- bzw. Dichtringe (56) positionsgesteuert bis in den Uebergangsbereich zwischen Gewindeteil (44) und dem Neckring oder bis in den Uebergangsbereich zwischen dem Neckring und dem Blasteil (43) in die Preformen (10x) eingeführt werden, und in Kombination die Preformen (10x) nach dem Einschrieben der Preformen in die Kühlhülsen bis in den Uebergangsbereich zwischen Gewindeteil (44) und dem Neckring und / oder bis in den Uebergangsbereich zwischen dem Neckring und dem Blasteil (43) von aussen gekühlt werden.

## Claims

1. An auxiliary device, which has a gripper with a plurality of nipples (30), each having an insertion part, which is able to be inserted into sleeve-shaped injection-moulded parts (10), which in still hot, dimensionally unstable state have been removed from open mould halves (8, 9) and have been transferred to removal sleeves or respectively cooling sleeves (21) for an external cooling, wherein the nipples (30) are arranged on a shared actuation plate (16), to which there are assigned controlled drive means for the in and out movement of the nipples (30) into or respectively out from the sleeve-shaped injection-moulded parts (10), **characterized in that** the insertion parts of the nipples (30) have radially bulgeable press- or respectively sealing rings (56) that can be inserted into the sleeve-shaped injection-moulded parts (10),
that a holding shoulder (54, 55, 100) is assigned in each case to both sides of the press- or respectively sealing rings (56) in axial direction of the insertion parts, which holding shoulders are movable relative to one another for the bulging of the press- or respectively sealing rings (56), wherein the press- or respectively sealing rings (56) are able to be squeezed together between the two holding shoulders (54, 55, 100) in an analogous manner to a thermos flask closure, and that the nipples (30) are arranged on a shared actuation plate (16), to which controlled drive means are assigned for the in and out movement of the nipples (30) into or respectively out from the sleeve-shaped injection-moulded parts (10).

2. The auxiliary device according to claim 1,
**characterized in that**
the press- or respectively sealing rings (56) in the non-bulged state are slightly floatingly supported with respect to the axial orientation of the nipples (30).

3. The auxiliary device according to claim 1 or 2,
**characterized in that**
each nipple (30) has two tube pieces which are movable relative to one another, at the end of which in each case one of the holding shoulders (54, 55) is arranged.

4. The auxiliary device according to one of the preceding claims,
**characterized in that**
at least one holding shoulder (54, 55) is movable via a pneumatically operable piston (70, 71).

5. The auxiliary device according to one of the preceding claims,
**characterized in that**
a return spring (81, 82) is assigned to the movable holding shoulder (54, 55) for the retraction.

6. The auxiliary device according to one of claims 3 to 5,
**characterized in that**
at least one of the tube pieces, which are movable relative to one another, has an air duct (93) which is able to be connected to a source of compressed and/or vacuum air.

7. The auxiliary device according to one of the preceding claims,
**characterized in that**
it has a controllable removal device (11), with at least a number of water-cooled removal sleeves (40), corresponding to the number of injection moulding positions of the injection moulds.

8. A method for finishing preforms (10) with a threaded part (44), a necking ring and a blow-moulded part (43),
- which are removed from the open mould halves (8, 9) in a still hot, dimensionally unstable state,
- are transferred to removal sleeves or respectively cooling sleeves (21) for an outer cooling
- and which are, after insertion, pressed by compressed air onto the inner wall (45) of the removal sleeves or respectively cooling sleeves (21) within the time period of an injection moulding cycle and calibrated,
**characterized in that**
a) press- or respectively sealing rings (56) mounted on nipples (30) for the calibration are inserted in a position-controlled manner into each of the preforms (10) in the region between threaded part (44) and blow-moulded part (43), wherein
b) the press- or respectively sealing rings (56) are squeezed together between two holding shoulders, movable relative to one another, and are bulged mechanically up to contact onto the inner wall of the preforms (10) in a manner analogous to a thermos flask closure, and wherein
c) by generating a force directed radially in the direction of the inner wall, the interior of each blow-moulded part (43) is sealed to the exterior, and that
d) by means of compressed air introduced via the nipples (30), the blow-moulded parts (43) are pressed onto the inner wall (45) and calibrated.

9. The method according to claim 8,
**characterized in that**
the press- or respectively sealing rings (56) are bulged by two holding shoulders (54, 55) which are movable relative to one another, wherein the holding shoulders (54, 55) are movable towards one another with the same stroke to avoid an axial displacement during the sealing function.

10. The method according to one of the preceding claims,
**characterized in that**
after the calibration, the preforms (10) are removed from the cooling sleeve (21) by means of the press- or respectively sealing rings (56) with inflated sealing rings, and if applicable are transferred to an after-cooler (19).

11. The method according to one of the preceding claims,
**characterized in that**
press- or respectively sealing rings (56) mounted on nipples (30) for the calibration are inserted, in a position-controlled manner, into the preforms (10x) into the transition region between threaded part (44) and the necking ring or into the transition region between the necking ring and the blow-moulded part (43) and, in combination, the preforms (10x) are cooled from the outside after insertion of the preforms into the cooling sleeves into the transition region between threaded part (44) and the necking ring and/or into the transition region between the necking ring and the blow-moulded part (43).

## Revendications

1. Dispositif auxiliaire, lequel comporte un preneur avec une pluralité de mamelons (30), avec chacun une partie d'introduction laquelle peut s'introduire dans des pièces (10) moulées par injection en forme de douilles, lesquelles ont été prélevées à l'état encore chaud, déformable dans des moitiés (8, 9) de moule ouvertes et transférées à des douilles de prélèvement ou douilles de refroidissement (21) pour un refroidissement externe, les mamelons (30) étant placés sur une plaque de manoeuvre (16) commune à laquelle sont associés des moyens d'entraînement commandés pour le déplacement d'entrée et de sortie des mamelons (30) dans les ou hors des pièces (10) moulées par injection en forme de douilles, **caractérisé en ce que** les parties d'introduction des mamelons (30) comportent des bagues de serrage ou bagues d'étanchéité (56), lesquelles peuvent s'introduire dans les pièces (10) moulées par injection en forme de douilles,
**en ce que** dans la direction axiale des parties d'introduction, sont associés aux deux côtés des bagues de serrage ou bagues d'étanchéité (56) chaque fois un épaulement de maintien (54, 55, 100), lesquels sont déplaçables l'un par rapport à l'autre, pour le bombage des bagues de serrage ou bagues d'étanchéité (56), les bagues de serrage ou bagues d'étanchéité (56) étant susceptibles d'être écrasées entre les deux épaulements de maintien (54, 55, 100) et mécaniquement bombables, de manière analogue à une fermeture de bouteille thermos et **en ce que** les mamelons (30) sont placés sur une plaque de manoeuvre (16) commune à laquelle sont associés des moyens d'entraînement commandés, pour le déplacement d'entrée et de sortie des mamelons (30) dans les ou hors des pièces (10) moulées par injection en forme de douilles.

2. Dispositif auxiliaire selon la revendication 1,
**caractérisé en ce**
**qu'**à l'état non bombé, les bagues de serrage ou bagues d'étanchéité (56) sont logées en étant légèrement flottantes en rapport à l'orientation axiale des mamelon (30).

3. Dispositif auxiliaire selon la revendication 1 ou 2,
**caractérisé en ce que**
chaque mamelon (30) comporte deux pièces tubulaires mobiles l'une par rapport à l'autre, sur l'extrémité desquelles est monté chaque fois un épaulement de maintien (54, 55).

4. Dispositif auxiliaire selon l'une quelconque des revendications précédentes,
**caractérisé en ce**
**qu'**au moins un épaulement de maintien (54, 55) est mobile par l'intermédiaire d'un piston (70, 71) à actionnement pneumatique.

5. Dispositif auxiliaire selon l'une quelconque des revendications précédentes,
**caractérisé en ce que**
pour le rappel, l'épaulement de maintien (54, 55) mobile est associé à un ressort de rappel (81, 82).

6. Dispositif auxiliaire selon l'une quelconque des revendications 3 à 5,
**caractérisé en ce**
**qu'**au moins l'une des pièces tubulaires mobiles l'une par rapport à l'autre comporte un canal d'air (93) qui peut se raccorder sur une source d'air comprimé et/ou d'air d'aspiration.

7. Dispositif auxiliaire selon l'une quelconque des revendications précédentes,
**caractérisé en ce**
**qu'**il comporte un dispositif de prélèvement (11) susceptible d'être commandé avec au moins une quantité de douilles de prélèvement (40) refroidies par eau qui correspond à la quantité de positions de moulage par injection des moules de moulage par injection.

8. Procédé destiné au post-usinage de préformes (10), avec une partie filetée (44), un moule de bague, ainsi qu'une pièce soufflée (43),
- que l'on retire, à l'état encore chaud, déformable des moitiés (8, 9) de moule ouvertes,
- qu'on transfère à des douilles de prélèvement ou douilles de refroidissement (21) pour un refroidissement externe,
- et qu'après insertion, on presse à l'aide d'air comprimé contre la paroi interne (45) des douilles de prélèvement ou douilles de refroidissement (21) pendant la période d'un cycle de moulage par injection et qu'on calibre,
**caractérisé en ce**
a) **que** pour le calibrage, en commandant leur position, on introduit des bagues de serrage ou bagues d'étanchéité (56) montées sur des mamelons (30) dans chacune des préformes (10), dans la zone entre la partie filetée (44) et la pièce soufflée (43),
b) les bagues de serrage ou bagues d'étanchéité (56) étant écrasées entre deux épaulements de maintien mobiles l'un par rapport à l'autre et étant bombées mécaniquement jusqu'au contact avec la paroi interne des préformes (10), de manière analogue à une fermeture de bouteille thermos et
c) par génération d'une force dirigée radialement en direction de la paroi interne, l'espace interne de chaque pièce soufflée (43) étant étanchéifié vers l'extérieur et en ce
d) **qu'**à l'aide d'air comprimé introduit par l'intermédiaire des mamelons (30), on presse les pièces soufflées (43) contre la paroi interne (45) et on les calibre.

9. Procédé selon la revendication 8,
**caractérisé en ce que**
les bagues de serrage ou bagues d'étanchéité (56) sont bombées par deux épaulements de maintien (54, 55) mobiles l'un par rapport à l'autre, pour éviter un déplacement axial pendant la fonction d'étanchéité, les épaulements de maintien (54, 55) était déplacés l'un vers l'autre avec la même course.

10. Procédé selon l'une quelconque des revendications précédentes,
**caractérisé en ce qu'**après le calibrage, à l'aide des bagues de serrage ou bagues d'étanchéité (56), on retire les préformes (10) avec les bagues d'étanchéité bombées hors de la douille de refroidissement (21) et on les transfère le cas échéant à un post-refroidisseur (19).

11. Procédé selon l'une quelconque des revendications précédentes,
**caractérisé en ce que**
pour le calibrage, en commandant leur position, on introduit dans les préformes (10x) des bagues de serrage ou bagues d'étanchéité (56) montées sur des mamelons (30) jusque dans la zone de transition entre la partie filetée (44) et le moule de bague ou jusque dans la zone de transition entre le moule de bague et la pièce soufflée (43) et en association, après l'insertion des préformes dans les douilles de refroidissement jusque dans la zone de transition entre la partie filetée (44) et le moule de bague ou jusque dans la zone de transition entre le moule de bague et la pièce soufflée (43), on refroidit les préformes (10x) par l'extérieur.
